# EUROPEAN PATENT APPLICATION

(11) **EP 2 889 475 A1**
(43) Date of publication of application: **01.07.2015**
(21) Application number: 14166632.1
(22) Date of filing: 30.04.2014
(51) Int. Cl.: F03D 11/00, F03D 9/00

(54) **Wind turbine converter with a hydraulic pump**

(30) Priority: 27.12.2013 JP 2013272844
(71) Applicant: MITSUBISHI HEAVY INDUSTRIES, LTD., Tokyo 108-8215 (JP)
(72) Inventor: Nakayama, Shin, Tokyo, 108-8215 (JP); Noda, Yoshitomo, Tokyo, 108-8215 (JP); Seki, Seita, Tokyo, 108-8215 (JP); Numajiri, Tomohiro, Tokyo, 108-8215 (JP)
(74) Representative: Intès, Didier Gérard André

(57) **Abstract**

A wind turbine generator (1) is provided with a support base (4) including a mount part (12) a support shaft (6) including a proximal end part (14) fixed to the mount part, a middle part (16) for rotatably supporting a hub (8) and a distal part (18) disposed farther from the proximal end part (14) than the middle part (16) and supporting a static side of the hydraulic pump (22) at least one blade (10) configured to be supported by the hub. The proximal end part (14) of the support shaft has a shape that has different section moduli regarding two neutral axes that are orthogonal to an axis of the support shaft and are orthogonal to each other.

## Description

### [Technical Field]

The present invention relates to a wind turbine generator.

### [Background Art]

A wind turbine generator is typically provided with a nacelle placed over a tower. The nacelle has a nacelle mount (a support base) supported by the tower. The nacelle mount supports a rotation shaft via a bearing. To a distal end part of the rotation shaft which is disposed outside the nacelle, a rotor head consisting of a hub and blades is attached. A base end part of the rotation shaft which is disposed inside the nacelle is coupled to a drive train such as a speed increaser. The drive train is connected to a generator so that, at rotation of the rotor head upon receiving wind on the blades, the generator is driven via the rotation shaft.

In a wind turbine generator disclosed in Patent Reference 1, at least a part of the drive train or the generator is arranged on opposite side of the rotor head from the nacelle. In this case, a main shaft (a support shaft) is supported while being fixed by the nacelle. Further, the main shaft passes through the rotor head and rotatably supports the rotor head via a bearing.

### [Citation List]

### [Patent Reference]

[Patent Reference 1]
US 8198749 B

### [Summary of Invention]

### [Technical Problem]

According to the wind turbine generator disclosed by Patent Reference 1, it is possible to achieve weight reduction of the nacelle mount. However, it is also desirable to achieve weight reduction of the main shaft (the support shaft).

An object of at least one embodiment of the present invention is to provide a wind turbine generator by which it is possible to reduce weight of a support shaft that rotatably supports a hub while being fixed to a support base.

### [Solution to Problem]

A wind turbine generator according to at least one embodiment of the present invention comprises:
a support base including a mount part;
a support shaft including a proximal end part fixed to the mount part, a middle part for rotatably supporting a hub and a distal part disposed farther from the proximal end part than the middle part and supporting a static side of the hydraulic pump;
at least one blade configured to be supported by the hub,
wherein the proximal end part of the support shaft has a shape that has different section moduli regarding two neutral axes that are orthogonal to an axis of the support shaft and are orthogonal to each other.

With the wind turbine generator, when comparing moments about the two neutral axes that are orthogonal to an axis of the support shaft and are orthogonal to each other, these moments are often not the same, and one moment is larger than the other moment. Specifically, regarding the load acting on the support shaft, a load component (a dominant load component) generating a moment around one neutral axis is larger than a load component (a non-dominant load component) generating a moment around the other neutral axis.

For this reason, it is desirable that the proximal end part of the support shaft has relatively large bending strength with respect to the dominant load component and relatively small bending strength with respect to the non-dominant load component.

With the above configuration, the proximal end part of the support shaft has a shape that has two different section moduli regarding two neutral axes. Thus, the bending strength with respect to the non-dominant load component is made relatively small while making sure that stress by the dominant load component and the non-dominant load component acting on the proximal end part of the support shaft does not exceed allowable stress. Thus, it is possible to reduce the weight of the proximal end part of the support shaft.

In some embodiments, the support shaft extends along a horizontal direction, and the proximal end part of the support shaft has a shape that is asymmetric with respect to a rotation of 90 degrees about the axis of the support shaft.

With this configuration, as the proximal end part of the support shaft has a shape that is asymmetric with respect to a rotation of 90 degrees about the axis of the support shaft, it is possible to reduce the weight of the proximal end part of the support shaft reliably.

Here, the expression that the support shaft extends along a horizontal direction also includes not only the case where the axis of the support shaft completely coincides with the horizontal direction but also the case where the axis of the support shaft is tilted by a set angle with respect to the horizontal direction.

In some embodiments, at least one of an outer peripheral edge or an inner peripheral edge of the proximal end part of the support shaft has an elliptic shape when seen in a direction along the axis of the support shaft, the elliptic shape having a major axis extending along a vertical direction.

In a horizontal-axis wind turbine generator having the support shaft extending along the horizontal direction, based on the wind speed distribution in the vertical direction near the ground or the seal level, large load acts on the support shaft in the vertical direction. In this aspect, with the above configuration, the proximal end part of the support shaft has an elliptic shape which is long in the vertical direction and thus, the support has high bending strength with respect to the vertical load component. Therefore, even if there is variation in the wind speed distribution in the vertical direction, the support shaft is capable of supporting the hub and the hydraulic pump in a stable manner.

In some embodiments, at least one of an outer peripheral edge or an inner peripheral edge of the proximal end part of the support shaft has a rectangular shape when seen in a direction along the axis of the support shaft, the rectangular shape having a long side extending along a vertical direction.

With this configuration, as the proximal end part of the support shaft has a rectangular shape which is long in the vertical direction, it is possible to give high bending strength with respect to the vertical load component. Therefore, even if there is variation in the wind speed distribution in the vertical direction, the support shaft is capable of supporting the hub and the hydraulic pump in a stable manner.

In some embodiments, the proximal end part of the support shaft includes an upper section, a lower section and a side section which is disposed between the upper section and the lower section, and
the upper section and the lower section are thicker than the side section.

With this configuration, as the thickness of the upper section and the lower section is larger than the thickness of the side section, the proximal end part of the support shaft has high bending strength with respect to the load component in the vertical direction. Therefore, even if there is variation in the wind speed distribution in the vertical direction, the support shaft is capable of supporting the hub and the hydraulic pump in a stable manner.

In some embodiments, the proximal end part of the support shaft includes a cylindrical portion surrounding an axis of the support shaft and at least one rib provided integrally with the cylindrical portion, the at least one rib protruding from an inner peripheral surface of the cylindrical portion along a radial direction and extending along an axial direction.

With this configuration, by providing the rib in the proximal end part of the support shaft, it is possible to give high bending strength with respect to the vertical load component. Therefore, even if there is variation in the wind speed distribution in the vertical direction, the support shaft is capable of supporting the hub and the hydraulic pump in a stable manner.

In some embodiments, the proximal end part of the support shaft includes a cylindrical portion surrounding an axis of the support shaft and a flange portion provided integrally with the cylindrical portion along an outer peripheral edge or an inner peripheral edge of the cylindrical portion, the flange portion being fastened to the mount part by a plurality of bolts,
the flange portion has a plurality of bolt holes arranged in an arrangement direction along the outer peripheral edge or inner peripheral edge of the cylindrical portion, and
a distance between the bolt holes in each of an upper section and a lower section in the arrangement direction of the flange portion is smaller than a distance between the bolt holes in a side section of the flange portion in the arrangement direction.

With this configuration, by relatively narrowing the distance between the bolts applied to the upper section and the lower section of the proximal end part of the support shaft, more bolts can be provided to reduce tensile stress acting on each of the bolts. Thus, the proximal end part of the support shaft can be fastened to the mount part in a stable manner. Meanwhile, by relatively enlarging the distance between the bolts applied to the side section of the proximal end part of the support shaft, it is possible to reduce the number of work required for fastening while achieving reduction in the number and weight of the bolts.

In some embodiments, the proximal end part of the support shaft includes a cylindrical portion surrounding an axis of the support shaft and a flange portion provided integrally with the cylindrical portion along an outer peripheral edge or an inner peripheral edge of the cylindrical portion, the flange portion being fastened to the mount part by a plurality of bolts,
the flange portion has a plurality of bolt holes arranged in an arrangement direction along the outer peripheral edge or inner peripheral edge of the cylindrical portion, and
a diameter of a plurality of bolts respectively applied to the plurality of bolt holes in each of an upper section and a lower section of the flange portion is larger than a diameter of a plurality of bolts respectively applied to the plurality of bolt holes in a side section of the flange portion.

With this configuration, by relatively enlarging the diameter of the bolt applied to the upper section and the lower section of the proximal end part of the support shaft, it is possible to reduce a degree of stress acting on each bolt. Thus, the proximal end part of the support shaft can be fastened to the mount part in a stable manner. Meanwhile, by relatively reducing the diameter of the bolt applied to the side section of the proximal end part of the support shaft, it is possible to achieve weight reduction.

### [Advantageous Effects of Invention]

According to at least one embodiment of the present invention, it is possible to provide a wind turbine generator by which weight reduction of a support shaft that rotatably supports a hub while being fixed to a support base can be realized.

### [Brief Description of Drawings]

FIG.1 is a schematic view of an overall configuration of a wind turbine generator according to some embodiments of the present invention.
FIG.2 is a longitudinal section showing a schematic configuration of a hydraulic pump applied to a wind turbine generator according to some embodiments.
FIG.3 is a cross section showing a schematic configuration of a part of the hydraulic pump of FIG.2.
FIG.4 is a perspective diagram showing a schematic configuration of a support base that is applied to the wind turbine generator according to some embodiments.
FIG.5 is a perspective diagram showing a schematic configuration of a support base that is applied to the wind turbine generator according to some embodiments.
FIG.6 is a longitudinal section schematically showing the support shaft of FIG.5.
FIG.7 is a view of the support shaft of FIG.5 taken along an axial line.
FIG.8 is an illustration for explaining a relationship between wind speed distribution by a height direction and moment acting on the wind turbine generator.
FIG.9 is a schematic illustration of a shape of a support shaft that is applied to the wind turbine generator according to some embodiments, when seen in a direction along its axis.
FIG.10 is a schematic illustration of a shape of a support shaft that is applied to the wind turbine generator according to some embodiments, when seen in a direction along its axis.
FIG.11 is a schematic illustration of a shape of a support shaft that is applied to the wind turbine generator according to some embodiments, when seen in a direction along its axis.
FIG.12 is a schematic illustration of a shape of a support shaft that is applied to the wind turbine generator according to some embodiments, when seen in a direction along its axis.
FIG.13 is a schematic illustration of a shape of a support shaft that is applied to the wind turbine generator according to some embodiments, when seen in a direction along its axis.
FIG.14 is a schematic illustration of a shape of a support shaft that is applied to the wind turbine generator according to some embodiments, when seen in a direction along its axis.
FIG.15 is a schematic illustration of a shape of a support shaft that is applied to the wind turbine generator according to some embodiments, when seen in a direction along its axis.
FIG.16 is a schematic illustration of a shape of a support shaft that is applied to the wind turbine generator according to some embodiments, when seen in a direction along its axis.

### [Description of Embodiments]

Embodiments of the present invention will now be described in detail with reference to the accompanying drawings. It is intended, however, that unless particularly specified, dimensions, materials, shape, its relative positions and the like shall be interpreted as illustrative only and not limitative of the scope of the present invention.

For example, the expression, along one direction, means not only the state of being strictly parallel to one direction but the state of slightly inclining with respect to one direction.

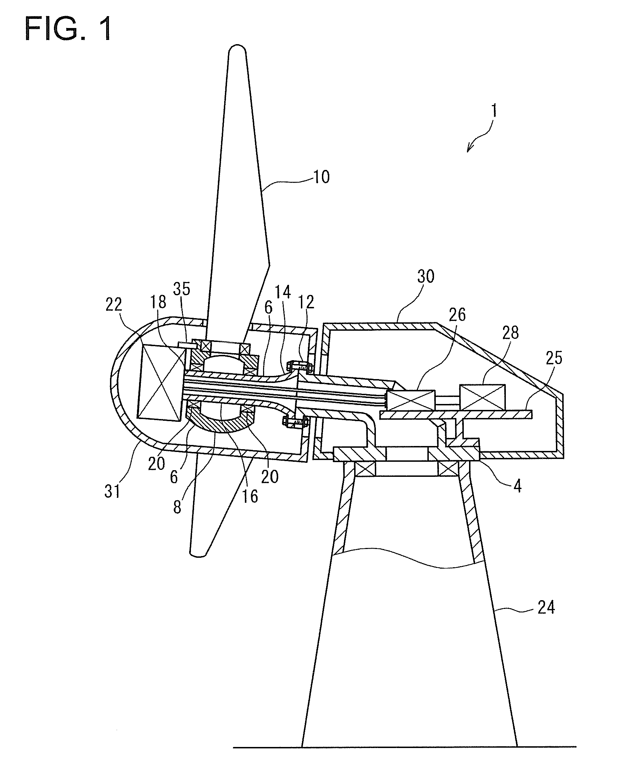

FIG.1 is a schematic view of an overall configuration of a wind turbine generator 1 according to some embodiments of the present invention.

As shown in FIG. 1, the wind turbine generator 1 has a support base 4, a support shaft 6, a hub 8, and at least one blade 10.

The support base (a nacelle mount) 4 has a mount part 12.

The support shaft 6 has a proximal end part 14, a middle part 16, and a distal part 18. The proximal end part 14 is fixed to the mount part 12, and the middle part 16 rotatably supports the hub 8 through a bearing 20. To the distal part 18, a static side of a hydraulic pump 22 is fixed.

In some embodiments, the wind turbine generator 1 has a tower 24 installed onshore or offshore, and the tower 24 supports the support base 4 rotatably around the vertical axis. Specifically, the wind turbine generator 1 is configured so that a yaw angle is controllable.

In some embodiments, a frame 25 is fixed to the support base 4, and a hydraulic motor 26 and a generator 28 which are connected to each other are installed on the frame 25. High-pressure operating oil is supplied from the hydraulic pump 22 to the hydraulic motor 26, and the hydraulic motor 26 is configured to drive the generator 28 using high-pressure operating oil, whereby the generator 28 generates electric power. Further, other devices may be installed on the frame 25 as well.

In some embodiments, three blades 10 are radially provided around the hub 8. Each of the blades 10 is mounted on the hub 8 in the state that the blade 10 is rotatable around the axis orthogonal to the support shaft 6. Specifically, the wind turbine generator 1 is configured so that a pitch angle is controllable.

In some embodiments, a nacelle cover 30 is fixed to the support base 4, and the nacelle cover 30 covers the hydraulic motor 26 and the generator 28. The mount part 12 of the support base 4 protrudes from the nacelle cover 30.

In some embodiments, the hub 8 and the hydraulic pump 22 are surrounded by a rotor head cover 31. The rotor head cover 31 is fixed, for instance, to the hub 8 and is configured to be rotatable with the hub 8.

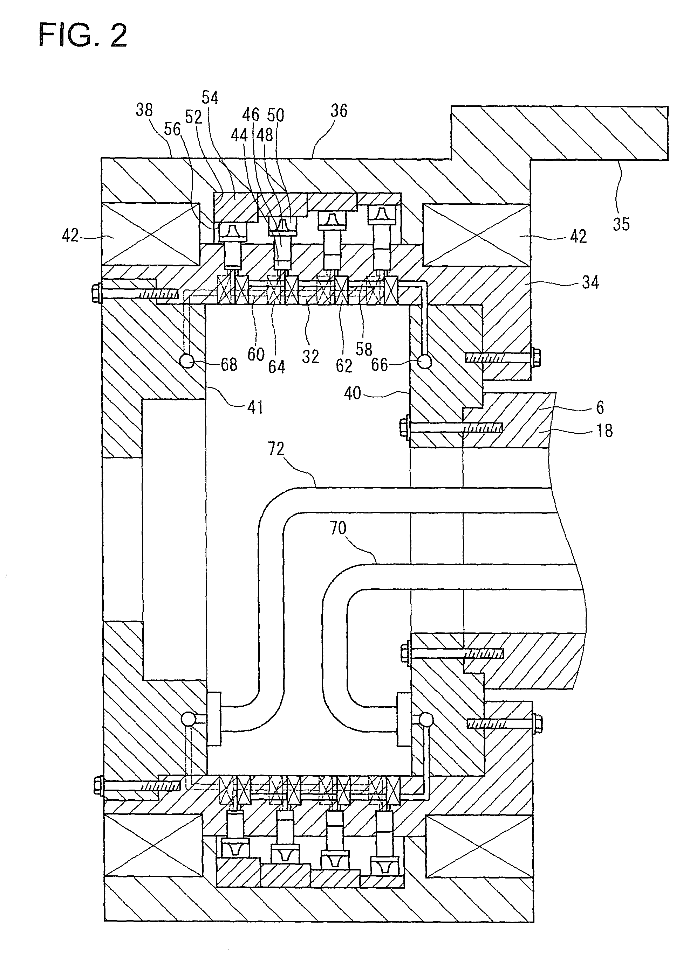

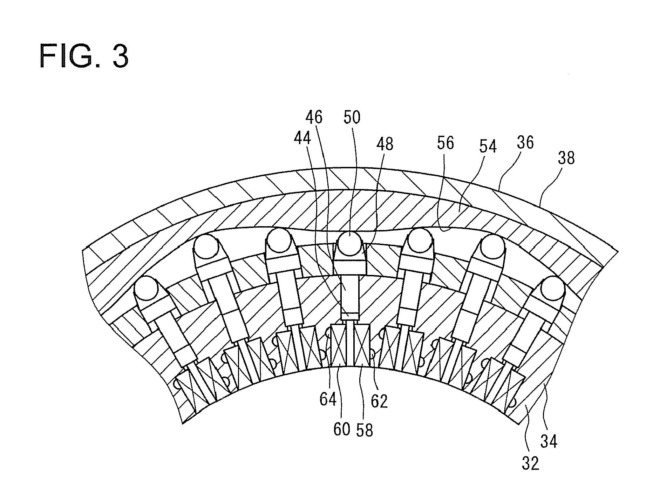

FIG.2 is a longitudinal section showing a schematic configuration of the hydraulic pump 22. FIG. 3 is a cross section showing a schematic configuration of a part of the hydraulic pump 22.

As shown in FIG. 2, the hydraulic pump 22 comprises a stator 34 and a rotor 38. The stator 34 has a cylinder block part 32 of a cylinder shape. The rotor 38 has a crank case part 36 of a cylinder shape which is arranged concentrically with the cylinder block part 32.

Further, the hydraulic pump 22 comprises a first endplate 40 and a second endplate 41 that are in an annular shape. The first endplate 40 and the second end plate are fixed to the stator 34. The first endplate 40 is coaxially fixed to the distal part 18 of the support shaft 6. In this embodiment, the distal part 18 is a distal end part of the support shaft 6. The stator 34 is concentrically fixed to the first endplate 40 and hence is arranged coaxially with respect to the support shaft 6.

Bearings 42 and 42 are arranged between the stator 34 and the rotor 38. The rotor 38 is supported by the stator 34 via the bearings 42 and 42 so that the rotor 38 is rotatable with respect to the stator 34. One end of an arm 35 is fixed to the rotor 38, and the other end of the arm 35 is fixed to the hub 8. Therefore, when the hub 8 rotates around the support shaft 6 upon receiving wind on the blade 10, the rotor 38 connected to the hub 8 also rotates via the arm 35.

A plurality of cylinders 44 arranged along the axial direction and circumferential direction of the cylinder block part 32 is provided for the cylinder block part 32. Each of the cylinders 44 extends along the radial direction of the cylinder block part 32, and opens to the rotor 38. A tip side of a piston 46 is inserted in an interior of the cylinder 44 through an opening so as to be reciprocable. A roller holder 48 is attached to a base end side of the piston 46 to hold a roller 50 rotatably.

A depression 52 is formed in the crankcase 36 of the rotor 38 on the cylinder block part 32 side. A plurality of cams 54 is fixed and arranged in the depression 52 in correspondence to a plurality of positions of the plurality of cylinders 44 disposed in the axial direction. The cam 54 is a ring cam and has a cam profile 56 extending in circumferential direction. The radial direction position of the cam profile 56 changes continuously according to the circumferential direction position.

A rotation axis of the roller 50 extends along the axial direction of the crank case part 36, when the rotor 38 rotates relative to the stator 34, the roller 50 travels relatively on the cam profile 56. In the meantime, the radial direction position of the roller 50 changes and in response to this, the piston 46 reciprocates between a top dead center and a bottom dead center.

A high-pressure flow path 58 and a low-pressure flow path 60 are provided in the cylinder block part 32 to be in communication with each of the cylinders 44. A high-pressure control valve 62 and a low-pressure control valve 64 are respectively provided in the high-pressure flow path 58 and the low-pressure flow path 60. The high-pressure control valve 62 and the low-pressure control valve 64 are controlled by a control device which is not illustrated, and are opened and closed at a prescribed timing.

Specifically, when the piston 46 moves to the bottom dead center from the top dead center, the high-pressure control valve 62 is closed and the low-pressure control valve 64 is opened so as to supply low-pressure operating to the cylinder 44 through the low-pressure control valve 64. When the piston 46 moves to the top dead center from the bottom dead center, the low-pressure control valve 64 is closed and the high-pressure control valve 62 is opened so as to discharge high-pressure operating oil from the cylinder 44 through the high-pressure control valve 62.

Further, collective paths 66 and 68 communicating with the high-pressure flow path 58 and the low-pressure flow path 60 are respectively provided in the first endplate 40 and the second endplate 41. A high-pressure pipe 70 and a low-pressure pipe 72 are connected to the collective paths 66 and 68, respectively. The high-pressure pipe 70 and the low-pressure pipe 72 extend inside the support shaft 6, and are connected to the hydraulic motor 26. The high-pressure operating oil discharged from the cylinder 44 is supplied to the hydraulic motor 26 through the high-pressure flow path 58, the collective path 66 and the high-pressure pipe 70. The low-pressure operating oil having performed work in the hydraulic motor 26 is supplied to the cylinder 44 through the low-pressure pipe 72, the collective path 68 and the low-pressure flow path 60.

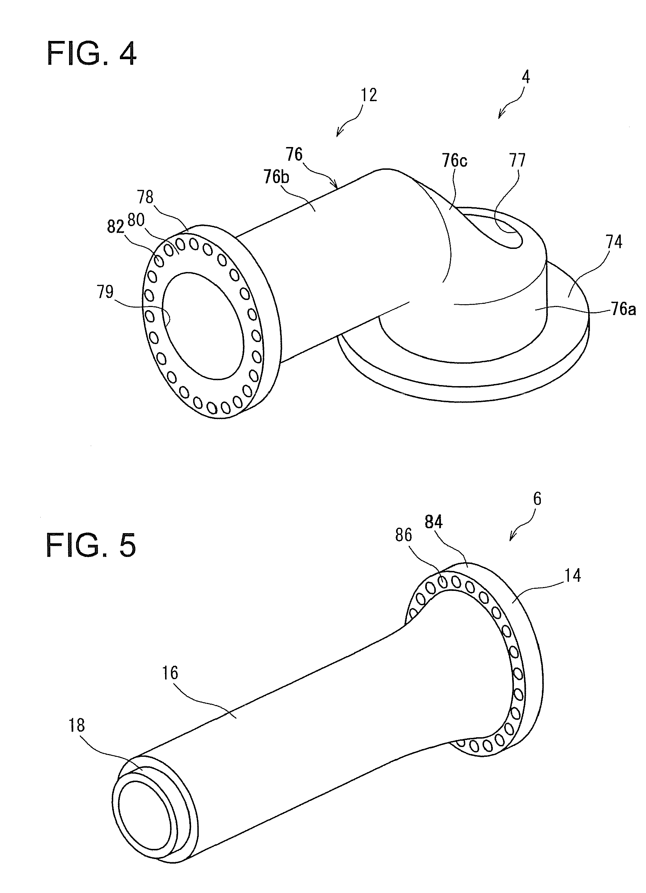

FIG. 4 is a perspective diagram schematically showing the support base 4.

The support base 4 has a pedestal part 74 of disk shape, and the mount part 12 is formed integrally on the pedestal part 74. The mount part 12 has, for instance, an elbow part 76 and an end wall part 78 of an annular shape which is integrally provided at one end of the elbow part 76.

The elbow part 76 is constituted by a trunk part 76a of a tubular shape extending upright from the pedestal part 74, a horizontal part 76b of a tubular shape extending along the horizontal direction and a corner part 76c connecting an upper end of the trunk part 76a and an end of the horizontal part 76b. The corner part 76c has an opening 77 and, for example, a part of the hydraulic motor 26 is arranged inside the corner part 76c through the opening 77.

The end wall part 78 has an opening 79 in the center, and the high-pressure pipe 70 and the low-pressure pipe 72 are arranged through the opening 79. The end wall part 78 has an annular seat surface 80 around the opening 79, and a plurality of bolt holes 82 is formed in the seat surface 80. The support base 4 is manufactured by casting, for instance.

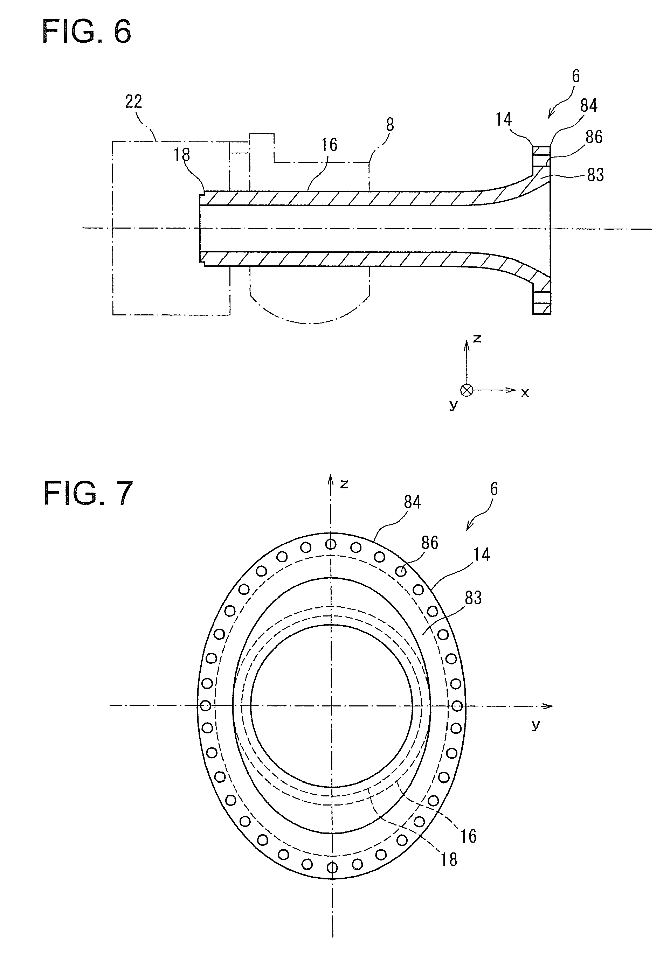

FIG. 5 is a perspective diagram schematically showing the support shaft 6. FIG. 6 is a longitudinal section schematically showing the support shaft 6. FIG. 7 is a view of the support shaft 6 along the axial direction.

As shown in FIG.5 to FIG.7, the tip part of the support shaft 6 has a flanged cylinder shape, and the middle part 16 has a cylinder shape. The proximal end part 14 of the support shaft 6 has a trumpet shape which increases in inner diameter and outer diameter as it approaches the proximal end of the support shaft 6. However, the diameter enlargement rate differs in z-axis direction and y-axis direction, and when the support shaft 6 is seen along the axial direction (x-axis direction), the proximal end part 14 of the support shaft 6 has an elliptic shape.

The proximal end part 14 of the support shaft 6 has a cylindrical part 83 surrounding an axis of the support shaft 6, and an outward flange part 84 provided integrally along an outer peripheral edge of the cylindrical part 83. The flange part 84 is located in the proximal end of the support shaft 6, and a plurality of bolt holes 86 is formed in the flange part 84 along a direction (an arrangement direction) extending along the outer peripheral edge or the inner peripheral edge of the cylindrical part 83. Bolts are put through the bolt holes 82, 86 while the flange part 84 is in contact with the seat surface 80, and the bolts are screwed with nuts so as to fasten the flange part 84 to the mount part 12. The support shaft 6 can be manufactured by casting or forging, for instance.

In some embodiments, the wind turbine generator 1 is a horizontal-axis wind turbine generator. This is, however, not restrictive, and the axis (x axis) of the support shaft 6 does not need to be strictly parallel to the horizontal direction as long as it is substantially along the horizontal direction. Therefore, between those two axes that are orthogonal to the axis of the support shaft 6, one axis (z axis) does not need to be strictly parallel to the vertical direction, and should just meet substantially the vertical direction (an up-down direction).

As shown in FIG. 5, FIG. 6, and FIG. 7, the outer peripheral edge and the inner peripheral edge of the proximal end part 14 of the support shaft 6 have an elliptic shape when seen in a direction along the axial direction (x-axis direction) of the support shaft 6, where the elliptic shape is longer in the z-axis direction than in the y-axis direction. Specifically, the outer peripheral edge and the inner peripheral edge of the proximal end part 14 of the support shaft 6 have an elliptic shape which has a major axis extending along the z-axis when seen in a direction along the axial direction (x-axis direction) of the support shaft 6. Therefore, the proximal end part 14 of the support shaft 6 has a shape that has two different section moduli Zz, Zy regarding two neutral axes (z axis, y axis) that are orthogonal to each other. In addition, the x-axis, the y-axis, and the z-axis are orthogonal to one another.

With the wind turbine generator 1, when comparing moments about the two neutral axes that are orthogonal to the axis of the support shaft 6 and are orthogonal to each other, these moments are often not equal, and one moment is larger than the other moment. Specifically, regarding the load acting on the support shaft 6, a load component (a dominant load component) generating a moment around one neutral axis is larger than a load component (a non-dominant load component) generating a moment around the other neutral axis.

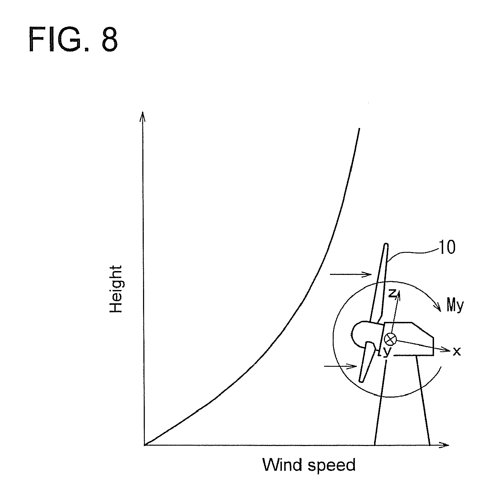

FIG. 8 shows the distribution by a height direction. As shown in FIG. 8, the wind speed becomes higher with distance from the ground. For this reason, in the horizontal-axis wind turbine generator 1, the wind pressure acting on the blade 10 becomes larger as it becomes closer to the top, and the moment My around the y-axis acts on the support shaft 6. Specifically, the load in the vertical direction which raises the distal part 18 of the support shaft 6 upward acts on the support shaft 6 as a dominant load component.

Although the wind speed differs in the horizontal direction, it is not as significant as the variation in the height direction. The moment Mz around the z-axis is small compared to the moment My around the y-axis. Specifically, the load (non-dominant load component) acting to shake the distal part 18 of the support shaft 6 horizontally in a right-and-left direction is smaller than the dominant load component in the vertical direction. Particularly in the case where the support shaft 6 can be turned into the wind by a yaw angle control, the non-dominant load component can be made small.

Therefore, it is desirable that the proximal end part 14 of the support shaft 6 has relatively large bending strength with respect to the dominant load component and relatively small bending strength with respect to the non-dominant load component.

With the above configuration, the proximal end part 14 of the support shaft 6 has a shape that has two different section moduli regarding two neutral axes. Thus, the bending strength with respect to the non-dominant load component is made relatively small while making sure that stress by the dominant load component and the non-dominant load component acting on the proximal end part 14 of the support shaft 6 does not exceed allowable stress. Thus, it is possible to reduce the weight of the proximal end part 14 of the support shaft 6.

Consequently, with the above configuration, it is possible to achieve size reduction of the support shaft 6 and the support base 4, and hence achieve size reduction of the nacelle cover 30. Moreover, in the case where the support base 4 is supported by the tower 24, it is possible to lower the strength of the tower 24.

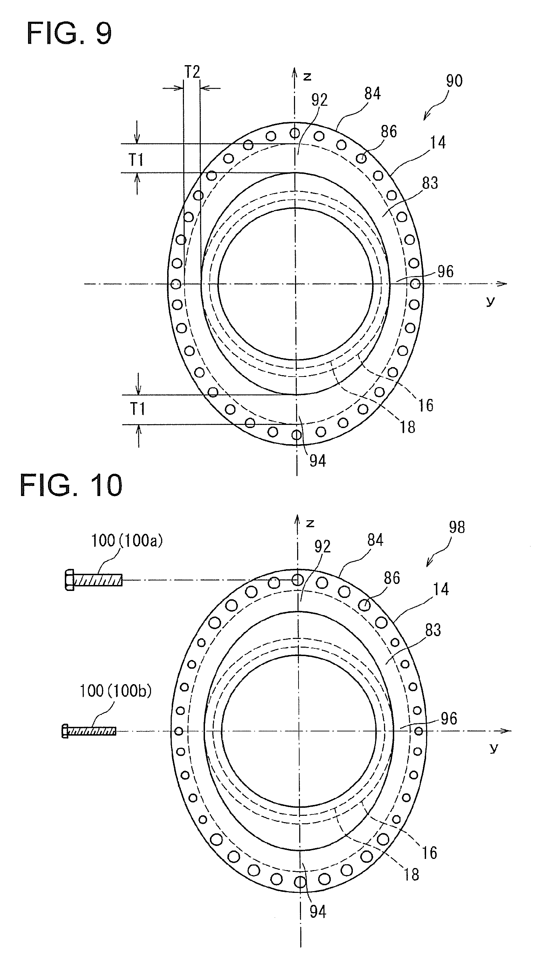

FIG.9 is a schematic illustration of a shape of a support shaft 90 that is applied to the wind turbine generator 7 according to some embodiments, when seen in a direction along its axis (x axis).

As shown in FIG. 9, the proximal end part 14 of the support shaft 90 includes an upper section 92, a lower section 94 and a side section 96 which is disposed between the upper section 92 and the lower section 94, and the upper section 92 and the lower section 94 have thickness T1 in the cylindrical part 83, which is larger than thickness T2 of the side section in the cylindrical part 83.

With this configuration, the proximal end part 14 of the support shaft 90 has high bending strength with respect to the load component in the vertical direction, as the thickness T1 of the cylindrical part 83 in the upper section 92 and the lower section 94 is larger than the thickness T2 of the cylindrical part 83 in the side section 96. Therefore, even if there is variation in the wind speed distribution in the vertical direction, the support shaft 90 is capable of supporting the hub 8 and the hydraulic pump 22 in a stable manner.

FIG.10 schematically illustrates a shape of a support shaft 98 that is applied to the wind turbine generator 1 according to some embodiments, when seen in a direction along its axis (x axis).

As shown in FIG. 10, in some embodiments, the proximal end part 14 of the support shaft 98 is fixed to the mount part 12 with a plurality of bolts 100. Among this plurality of bolts 100, a diameter of the bolt 100a applied to the bolt hole in each of the upper section 92 and the lower section 94 of the proximal end part 14 of the support shaft 98 is larger than a diameter of a bolt 100b applied to the bolt hole in the side section 96 of the proximal end part 14 of the support shaft 98.

With this configuration, by relatively enlarging the diameter of the bolt 100a applied to the upper section 92 and the lower section 94 of the proximal end part 14 of the support shaft 98, it is possible to reduce the stress (stress degree) which acts on the bolt 100a per unit cross-section area. Thus, the proximal end part 14 of the support shaft 98 can be fastened to the mount part 12 in a stable manner. Meanwhile, by relatively reducing the diameter of the bolt 100b applied to the side section 96 of the proximal end part 14 of the support shaft 98, it is possible to achieve weight reduction.

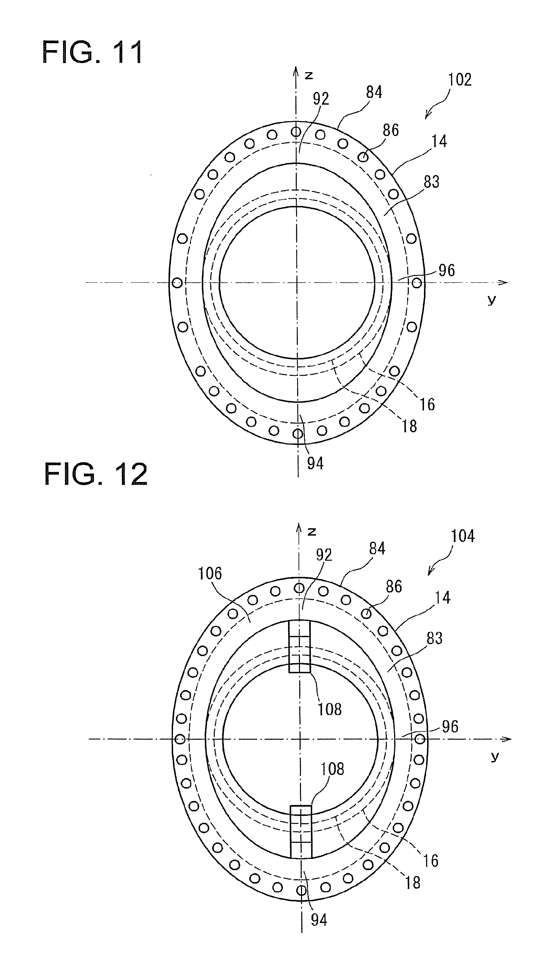

FIG. 11 is a schematic illustration of a shape of a support shaft 102 that is applied to the wind turbine generator 1 according to some embodiments, when seen in a direction along its axis (x axis).

As shown in FIG. 11, in some embodiments, the distance between the bolts applied to the upper section 92 and the lower section 94 of the proximal end part 14 of the support shaft 102 is narrower than the distance between the bolts applied to the side section 96 of the proximal end part 14 of the support shaft 102. In other words, the interval of adjacent two of the bolt holes 86 in the upper section 92 and the lower section 94 of the proximal end part 14 of the support shaft 102 in the arrangement direction along the outer peripheral edge or the inner peripheral edge of the cylindrical part 83 is narrower than the distance between the bolt holes 86 in the side section 96.

With this configuration, by relatively narrowing the distance between the bolts applied to the upper section 92 and the lower section 94 of the proximal end part 14 of the support shaft 102, more bolts can be provided to reduce tensile stress acting on each of the bolts so that the proximal end part 14 of the support shaft 102 can be fastened to the mount part 12 in a stable manner. Meanwhile, by relatively enlarging the distance between the bolts applied to the side section of the proximal end part 14 of the support shaft 102, it is possible to reduce the number of work required for fastening while achieving reduction in the number and weight of the bolts.

FIG. 12 schematically illustrates a shape of a support shaft 104 that is applied to the wind turbine generator 1 according to some embodiments, when seen in a direction along its axis (x axis).

As shown in FIG. 12, in some embodiments, the proximal end part 14 of the support shaft 104 has at least one rib 108 provided integrally with the cylindrical part 83. In this embodiment, two ribs 108 are provided apart from each other in the vertical direction. Each of the ribs 108 protrudes inward in the radial direction from an inner peripheral surface of the cylindrical part 83, and extends along the axial direction.

With this configuration, by forming the rib 108 in the proximal end part 14 of the support shaft 104, it is possible to give high bending strength with respect to the vertical load component. Therefore, even if there is variation in the wind speed distribution in the vertical direction, the support shaft 104 is capable of supporting the hub 8 and the hydraulic pump 22 in a stable manner.

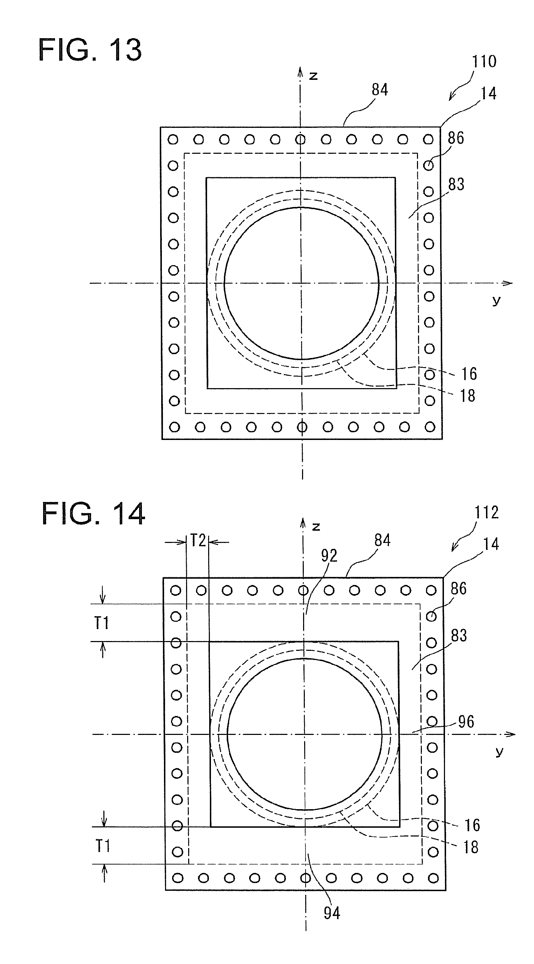

FIG.13 schematically illustrates a shape of a support shaft 110 that is applied to the wind turbine generator 1 according to some embodiments, when seen in a direction along its axis (x axis).

As shown in FIG. 13, in some embodiments, the outer peripheral edge and the inner peripheral edge of the proximal end part 14 of the support shaft 110 each have a rectangular shape which is long in the vertical direction, when seen in a direction along the axis of the support shaft 110. In other words, the outer peripheral edge and the inner peripheral edge of the proximal end part 14 of the support shaft 110 each have a rectangular shape, which has a long side extending along the vertical direction, when seen in a direction along the axis of the support shaft 110.

With this configuration, as the proximal end part 14 of the support shaft 110 has a rectangular shape which is long in the vertical direction, it is possible to give high bending strength with respect to the vertical load component. Therefore, even if there is variation in the wind speed distribution in the vertical direction, the support shaft 110 is capable of supporting the hub 8 and the hydraulic pump 22 in a stable manner.

FIG. 14 schematically illustrates a shape of a support shaft 112 that is applied to the wind turbine generator 1 according to some embodiments, when seen in a direction along its axis (x axis).

As shown in FIG. 14, in some embodiments, the upper section 92 and the lower section 94 of the proximal end part 14 of the support shaft 112 are constituted by side walls whose width direction is along the horizontal direction, whereas the side section 96 is constituted by a side wall whose width direction is along the vertical direction. Further, the thickness T1 of the upper section 92 and the lower section 94 is larger than the thickness T2 of the side section 96.

With this configuration, as the thickness T1 of the upper section 92 and the lower section 94 is larger than the thickness T2 of the side section 96, the proximal end part 14 of the support shaft 112 has high bending strength with respect to the load component in the vertical direction. Therefore, even if there is variation in the wind speed distribution in the vertical direction, the support shaft 112 is capable of supporting the hub 8 and the hydraulic pump 22 in a stable manner.

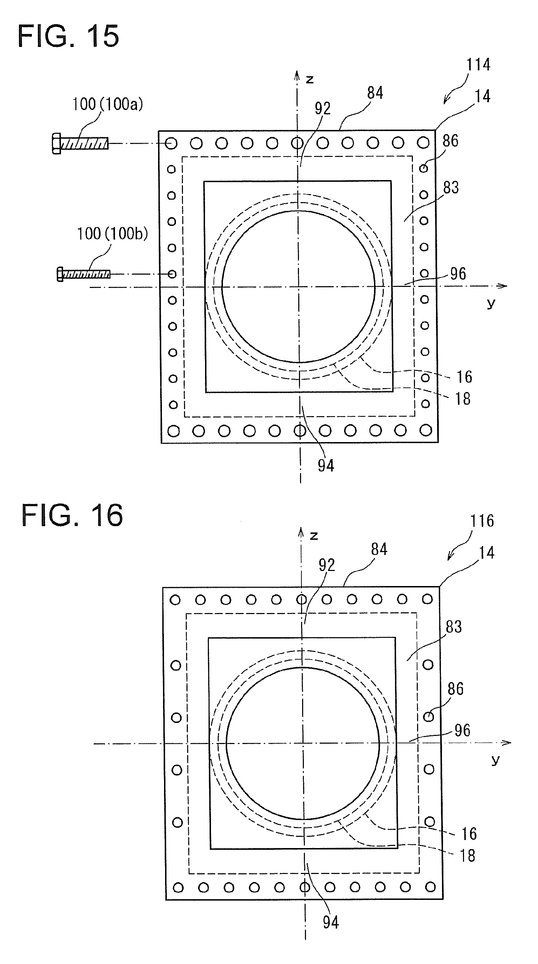

FIG.15 schematically illustrates a shape of a support shaft 114 that is applied to the wind turbine generator 1 according to some embodiments, when seen in a direction along its axis (x axis).

As shown in FIG. 15, in some embodiments, the proximal end part 14 of the support shaft 114 is fixed to the mount part 12 with the plurality of bolts 100. Among this plurality of bolts 100, a diameter of the bolt 100a applied to the bolt hole in each of the upper section 92 and the lower section 94 of the proximal end part 14 of the support shaft 114 is larger than a diameter of a bolt 100b applied to the bolt hole in the side section 96 of the proximal end part 14 of the support shaft 114.

With this configuration, by relatively enlarging the diameter of the bolt 100a applied to the upper section 92 and the lower section 94 of the proximal end part 14 of the support shaft 114, it is possible to reduce the stress (stress degree) which acts on the bolt 100a per unit cross-section area. Thus, the proximal end part 14 of the support shaft 114 can be fastened to the mount part 12 in a stable manner. Meanwhile, by relatively reducing the diameter of the bolt 100b applied to the side section 96 of the proximal end part 14 of the support shaft 114, it is possible to achieve weight reduction.

FIG. 16 schematically illustrates a shape of a support shaft 116 that is applied to the wind turbine generator 1 according to some embodiments, when seen in a direction along its axis (x axis).

As shown in FIG. 16, in some embodiments, the distance between the bolts applied to the upper section 92 and the lower section 94 of the proximal end part 14 of the support shaft 116 is narrower than the distance between the bolts applied to the side section 96 of the proximal end part 14 of the support shaft 116. In other words, the distance between the bolt holes 86 in the upper section 92 and the lower section 94 of the proximal end part 14 of the support shaft 116 is narrower than the distance between the bolt holes 86 in the side section 96.

With this configuration, by relatively narrowing the distance between the bolts applied to the upper section 92 and the lower section 94 of the proximal end part 14 of the support shaft 116, more bolts can be provided to reduce tensile stress acting on each of the bolts so that the proximal end part 14 of the support shaft 116 can be fastened to the mount part 12 in a stable manner. Meanwhile, by relatively enlarging the distance between the bolts applied to the side section of the proximal end part 14 of the support shaft 116, it is possible to reduce the number of work required for fastening while achieving reduction in the number and weight of the bolts.

The present invention is not limited to the embodiments described above, and should include various modifications and combination of the above embodiments.

For example, although, in some embodiments, each of the outer peripheral edge and the inner peripheral edge of the proximal end part 14 of the support shaft has an elliptic shape or a rectangular shape when seen in the direction along its axis, their shapes are not limited to these as long as at least one of the outer peripheral edge and the inner peripheral edge of the proximal end part 14 of the support shaft has an elliptic shape or a rectangular shape when seen in the direction along its axis. Further, the proximal end part 14 of the support shaft has a shape that is asymmetric with respect to a rotation of 90 degrees about the axis of the support shaft. As the proximal end part of the support shaft has an asymmetric shape with respect to a rotation of 90 degrees about the axis of the proximal end part 14 of the support shaft, it is possible to reduce the weight of the proximal end part 14 of the support shaft reliably.

Moreover, the expression regarding the shapes such as the rectangular shape and the elliptic shape includes not only a rectangular shape or an elliptic shape in a strict geometric sense but also a shape that can be considered as a rectangular shape, an elliptic shape and the like.

In some embodiments, although the cylinder block part 32 of the stator 34 is arranged inside the crank case part 36 of the rotor 38 in the radial direction, it may be arranged outside the crank case part 36 in the radial direction. The configuration of the hydraulic pump should not limited by other factors.

### [Reference Signs list]

- 1: Wind turbine generator
- 4: Support base
- 6: Support shaft
- 8: Hub
- 10: Blade
- 12: Mount part
- 14: Proximal end part
- 16: Middle part
- 18: Distal part
- 20: Bearing
- 22: Hydraulic pump
- 24: Tower
- 25: Frame
- 26: Hydraulic motor
- 28: Generator
- 74: Pedestal part
- 76: Elbow part
- 76a: Trunk part
- 76b: Horizontal part
- 76c: Corner part
- 77: Opening
- 78: End wall part
- 79: Opening
- 80: Seat surface
- 82: Bolt hole
- 83: Cylindrical part
- 84: Flange part
- 86: Bolt hole

## Claims

1. A wind turbine generator (1) comprising:
a support base (4) including a mount part (12);
a support shaft (6) including a proximal end part (14) fixed to the mount part (12), a middle part (16) for rotatably supporting a hub (8) and a distal part (18) disposed farther from the proximal end part (14) than the middle part (16) and supporting a static side of a hydraulic pump (22);
at least one blade (10) configured to be supported by the hub (8),
wherein the proximal end part (14) of the support shaft (6) has a shape that has different section moduli regarding two neutral axes (y, z) that are orthogonal to an axis (x) of the support shaft (6) and are orthogonal to each other.

2. The wind turbine generator (1) according to claim 1,
wherein the support shaft (6) extends along a horizontal direction, and
wherein the proximal end part (14) of the support shaft (6) has a shape that is asymmetric with respect to a rotation of 90 degrees about the axis of the support shaft (6).

3. The wind turbine generator according to claims 1 or 2,
wherein at least one of an outer peripheral edge or an inner peripheral edge of the proximal end part (14) of the support shaft (6) has an elliptic shape when seen in a direction along the axis of the support shaft (6), the elliptic shape having a major axis extending along a vertical direction.

4. The wind turbine generator according to claims 1 or 2,
wherein at least one of an outer peripheral edge or an inner peripheral edge of the proximal end part (14) of the support shaft (6) has a rectangular shape when seen in a direction along the axis of the support shaft (6), the rectangular shape having a long side extending along a vertical direction.

5. The wind turbine generator according to any one of claims 1 to 4,
wherein the proximal end part (14) of the support shaft (6) includes an upper section (92), a lower section (94) and a side section (96) which is disposed between the upper section (92) and the lower section (94), and
wherein the upper section (92) and the lower section (94) are thicker than the side section (96).

6. The wind turbine generator according to claim any one of any one of claims 1 to 5,
wherein the proximal end part (14) of the support shaft (6) includes a cylindrical portion (83) surrounding an axis of the support shaft (6) and at least one rib (108) provided integrally with the cylindrical portion (83), the at least one rib (108) protruding from an inner peripheral surface of the cylindrical portion (83) along a radial direction and extending along an axial direction.

7. The wind turbine generator according to claim any one of any one of claims 1 to 6,
wherein the proximal end part (14) of the support shaft (6) includes a cylindrical portion (83) surrounding an axis of the support shaft (6) and a flange portion (84) provided integrally with the cylindrical portion (83) along an outer peripheral edge or an inner peripheral edge of the cylindrical portion (83), the flange portion (84) being fastened to the mount part (12) by a plurality of bolts,
wherein the flange portion (84) has a plurality of bolt holes (86) arranged in an arrangement direction along the outer peripheral edge or inner peripheral edge of the cylindrical portion (83), and
wherein a distance between the bolt holes (86) in each of an upper section (92) and a lower section (94) in the arrangement direction of the flange portion (84) is smaller than a distance between the bolt holes (86) in a side section (96) of the flange portion (84) in the arrangement direction.

8. The wind turbine generator according to claim any one of any one of claims 1 to 7,
wherein the proximal end part (14) of the support shaft (6) includes a cylindrical portion (83) surrounding an axis of the support shaft (6) and a flange portion (84) provided integrally with the cylindrical portion (83) along an outer peripheral edge or an inner peripheral edge of the cylindrical portion (83), the flange portion (84) being fastened to the mount part (12) by a plurality of bolts,
wherein the flange portion (84) has a plurality of bolt holes (86) arranged in an arrangement direction along the outer peripheral edge or inner peripheral edge of the cylindrical portion (83), and
wherein a diameter of a plurality of bolts (100a) respectively applied to the plurality of bolt holes (86) in each of an upper section (92) and a lower section (94) of the flange portion (84) is larger than a diameter of a plurality of bolts (100b) respectively applied to the plurality of bolt holes (86) in a side section (96) of the flange portion (84).
